(19) **Europäisches Patentamt**
**European Patent Office**
**Office européen des brevets**

(11) **EP 2 274 783 B1**

(12) **EUROPÄISCHE PATENTSCHRIFT**

(45) Veröffentlichungstag und Bekanntmachung des Hinweises auf die Patenterteilung:
**08.02.2012 Patentblatt 2012/06**

(21) Anmeldenummer: **09745435.9**

(22) Anmeldetag: **08.04.2009**

(51) Int Cl.:
**H01M 8/04** *(2006.01)*

(86) Internationale Anmeldenummer:
**PCT/DE2009/000487**

(87) Internationale Veröffentlichungsnummer:
**WO 2009/138051 (19.11.2009 Gazette 2009/47)**

(54) **VERFAHREN ZUR ERKENNUNG UND LOKALISIERUNG VON DEFEKTEN IN EINER BRENNSTOFFZELLE INNERHALB EINES BRENNSTOFFZELLENSTAPELS**

METHOD FOR RECOGNIZING AND LOCATING DEFECTS IN A FUEL CELL WITHIN A FUEL CELL STACK

PROCÉDÉ POUR LA DÉTECTION ET LA LOCALISATION DE DÉFAUTS DANS UNE PILE À COMBUSTIBLE À L'INTÉRIEUR D'UN EMPILEMENT DE PILES À COMBUSTIBLE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **10.05.2008 DE 102008023183**

(43) Veröffentlichungstag der Anmeldung:
**19.01.2011 Patentblatt 2011/03**

(73) Patentinhaber: **Forschungszentrum Jülich GmbH 52425 Jülich (DE)**

(72) Erfinder: **KULIKOVSKY, Andrei 52385 Nideggen (DE)**

(56) Entgegenhaltungen:
**EP-A- 2 017 630    US-A1- 2004 048 113**

- **KULIKOVSKY ET AL: "Feeding PEM fuel cells" ELECTROCHIMICA ACTA, ELSEVIER SCIENCE PUBLISHERS, BARKING, GB, Bd. 50, Nr. 6, 30. Januar 2005 (2005-01-30), Seiten 1323-1333, XP005004262 ISSN: 0013-4686**
- **NOPONEN M ET AL: "Measurement of current distribution in a free-breathing PEMFC" JOURNAL OF POWER SOURCES, ELSEVIER, AMSTERDAM, NL, Bd. 106, Nr. 1-2, 1. April 2002 (2002-04-01), Seiten 304-312, XP004348702 ISSN: 0378-7753**
- **METZGER P ET AL: "SOFC characteristics along the flow path" SOLID STATE IONICS, NORTH HOLLAND PUB. COMPANY. AMSTERDAM, NL, Bd. 177, Nr. 19-25, 15. Oktober 2006 (2006-10-15), Seiten 2045-2051, XP025033833 ISSN: 0167-2738 [gefunden am 2006-10-15]**
- **GHOSH P C ET AL: "In situ approach for current distribution measurement in fuel cells", JOURNAL OF POWER SOURCES, ELSEVIER SA, CH, vol. 154, no. 1, 9 March 2006 (2006-03-09), pages 184-191, XP025083767, ISSN: 0378-7753, DOI: DOI:10.1016/J.JPOWSOUR.2005.03.219 [retrieved on 2006-03-09]**

**Beschreibung**

Die Erfindung betrifft eine Brennstoffzelle, bzw. einen Brennstoffzellenstapel und insbesondere ein Verfahren zum Erkennung, und Lokalisieren von Defekten innerhalb des Brennstoffzellenstapels, die einen stromlosen Bereich innerhalb einer Brennstoffzelle bewirken.

Stand der Technik

Typische Brennstoffzellen in Labormaßstab weisen eine Oberfläche von ca. 100 cm$^2$ auf und erreichen regelmäßig eine Stromleistung von 10 bis 100 W. Zur Erzielung höherer Stromdichten werden mehrere Brennstoffeinzelzellen zu so genannten Brennstoffzellenstapeln zusammengefasst. Diese Brennstoffzellenstapel umfassen in der Regel 10 bis 100 solcher Einzelzellen, die über so genannte bipolare Platten elektrisch leitend verbunden werden. Der Zusammenbau vieler Einzelzellen verursacht jedoch häufig neue Probleme.

So zeigt sich bei Langzeitversuchen von Brennstoffzellenstapeln, dass sich innerhalb der Einzelzellen häufig stromfreie Bereiche ausbilden. Dies kann auf unterschiedliche Ursachen zurückgeführt werden, zum Beispiel auf eine lokale Korrosion der bipolaren Platten, auf eine Zerstörung der Funktionsschichten einer Membran-Elektroden-Einheit (MEA) oder bei Hochtemperatur-Brennstoffzellen die typische Gefahr der Chromablagerung in der Katalysatorschicht.

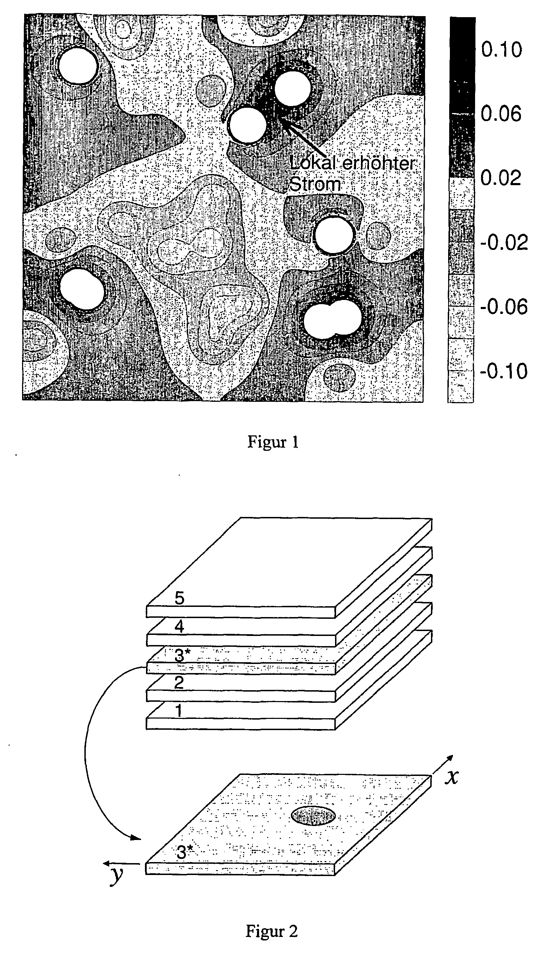

Unabhängig von der Art des Brennstoffzellenstapels hat sich gezeigt, dass ein einziger stromloser Bereich innerhalb einer Einzelzelle zu einer ungleichen Verteilung des Stromflusses über die Oberfläche der Einzelzelle führt. Dieser Effekt bedeutet natürlich einen lokalen Stromeinbruch, der durch eine entsprechend gesteigerte Stromstärke in den funktionierenden Bereichen dieser Einzellzelle kompensiert werden muss. Mit Hilfe einer Simulation konnte gezeigt werden, dass sich um einen stromlosen Bereich regelmäßig lokale Stromstärkespitzen an den Rändern dieses Bereiches ausbilden, wie es in der Figur 1 aus [3] dargestellt ist.

Diese lokal begrenzte Leistungserhöhung als Kompensationseffekt verursacht jedoch nachteilig eine zusätzliche kinetische und thermische Beanspruchung innerhalb dieser Zelle. Sofern sich zwei oder mehrere stromlose Bereich in unmittelbarer Nähe befinden, können diese Kompensationseffekte sich noch zusätzlich beeinflussen oder sogar überlagern. Es wird angenommen, dass es in Folge zu einer verstärkten Degradation dieser zwischen den einzelnen Bereichen auftretenden Brücken kommt, wie es ebenfalls aus Figur 1 ersichtlich ist.

Ziel der weiteren Entwicklung muss es daher sein, solche stromlosen Bereiche rechtzeitig zu erkennen und innerhalb der Brennstoffzelle zu lokalisieren, damit gegebenenfalls Zellen mit entsprechend defekten Bereichen frühzeitig aus einem Brennstoffzellenstapel ausgetauscht werden können.

Dazu ist aus [4] eine Methode zur Messung der Stromdichteverteilung in einer Brennstoffzelle bekannt, bei der eine semi-segmentierte Graphitplatte als passives Widerstandsnetzwerk und gleichzeitig als Bipolarplatte zwischen den Brennstoffzellen angeordnet ist. Die einzelnen Segmente sind elektrisch kontaktiert und aus den gemessenen Potentialdifferenzen an verschiedenen Orten der segmentierten Bipolarplatte kann auf die Stromdichteverteilung innerhalb der Brennstoffzelle geschlossen werden.

Nachteilig sind dazu alle einzelnen Segmente der zwischen den Brennstoffzellen angeordneten Bipolarplatte mit jeweils mindestens zwei elektrischen Drähten verbunden, die aus dem Brennstoffzellenstapel herausgeführt werden, um die Potentialdifferenzen zu messen.

Aufgabe und Lösung

Der Erfindung liegt die Aufgabe zugrunde, ein Verfahren zur Erkennung und Lokalisierung eines stromfreien Bereichs innerhalb einer Brennstoffzelle eines Brennstoffzellenstapels bereit zu stellen.

Die Aufgabe der Erfindung wird gelöst durch ein Verfahren zur Messung der Verteilung des bipolaren Plattenpotentials gemäß Hauptanspruch.

Vorteilhafte Ausgestaltungen des Verfahrens ergeben sich aus den jeweils rückgezogenen Ansprüchen.

Gegenstand der Erfindung

Der Grundgedanke der Erfindung basiert darauf, dass herausgefunden wurde, dass stromlose Bereiche innerhalb einer Brennstoffzelle einen störenden Einfluss auf den Verlauf des bipolaren Plattenpotentials haben, wobei der Einfluss auf den Verlauf mit zunehmender Entfernung zum stromlosen Bereich abnimmt [1]. Eine genauere Untersuchung dieses Effekts hat nun ergeben, dass sich der störende Einfluss auf den Verlauf des bipolaren Plattenpotentials in der Regel bis hin zu den Kanten der bipolaren Platten erstreckt. Die Amplitude der Spannungsstörung an der Kante der bipolaren Platte hängt dabei von der Größe des stromlosen Bereichs, dem Bereichswiderstand, dem Widerstand der bipolaren Patte, dem mittleren Strom des Brennstoffzellenstapels sowie der Entfernung zum Mittelpunkt des stromlosen Bereichs ab. Es wurde herausgefunden, dass es möglich ist, aus dem Verlauf eines bipolaren Plattenpotentials entlang der Kanten der bipolaren Platten sowohl einen stromlosen Bereich zu erkennen bzw. zu detektieren und zu lokalisieren, als auch dessen Amplitude zu ermitteln.

Die Empfindlichkeit des Verfahrens ist dabei unter anderem abhängig von der elektrischen Leitfähigkeit des Materials der Bipolarplatten. Je leitfähiger diese sind, desto geringer fallen die vorgenannten Effekte der Störungen aus. Daher ist es bislang nur schwer möglich, diese Effekte bei Hochtemperatur-Brennstoffzellen mit metallischen Bipolarplatten zu detektieren, da hier die Signale sehr gering ausfallen und extrem empfindliche Detektoren eingesetzt werden müssten. Demgegenüber ist das Verfahren bei Direkt-Methanol-Brennstoffzellen oder mit Wasserstoff betriebenen Brennstoffzellen mit herkömmlichen Detektoren schon jetzt sehr einfach anzuwenden.

Spezieller Beschreibungsteil

Nachfolgend wird das dem erfindungsgemäßen Verfahren zur Detektion und Lokalisierung eines stromfreien Bereichs innerhalb einer Brennstoffzelle zu Grunde liegende Model näher erläutert.

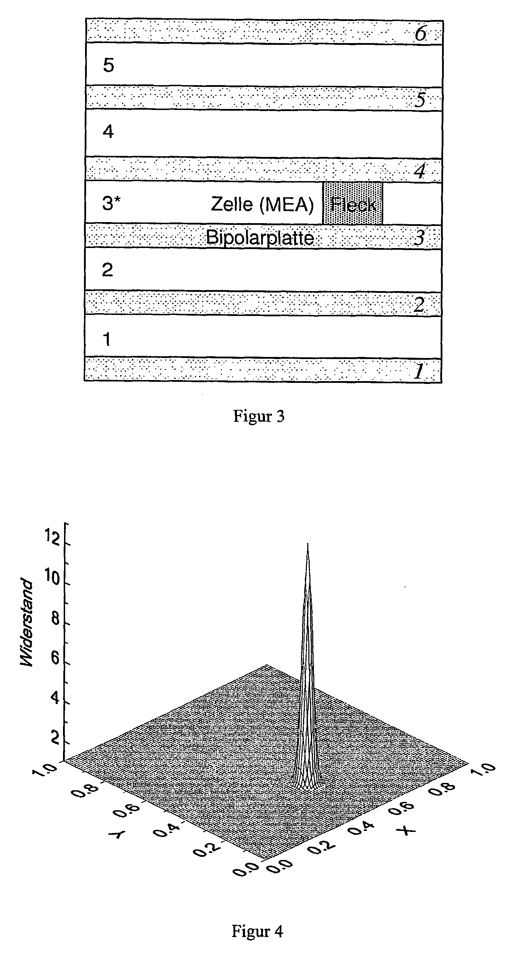

Betrachtet wird ein Brennstoffzellenstapel, umfassend fünf Brennstoffzellen (1 bis 5), von denen die Zelle Nr. 3 im Zentrum einen stromlosen Bereich aufweist, wie es in den Figuren 2 und 3 dargestellt ist. Die lokale Spannung jeder einzelnen Zelle ergibt sich aus der Differenz der lokalen Potentiale der benachbarten bipolaren Platten. Das Potential jeder bipolaren Platte ergibt sich wiederum aus der Differenz der lokalen Stromstärken in den benachbarten Brennstoffzellen.

Ziel ist es, ein qualitatives Verständnis der Störung des Bipolarplattenpotentials in Bezug auf den zu Grunde liegenden stromlosen Bereich herzustellen, wie es auch schon in [1] beschrieben wird. Die dort genannten Annahmen gelten auch für die hier nachfolgenden Ausführungen. Dazu kann in einem ersten Schritt vereinfacht angenommen werden, dass die lokale Polarisationskurve jeder Zelle linear verläuft.

$$V_a = V_{oc} - R_a j_a \qquad (1)$$

Andererseits ergibt sich die lokale Zellspannung aus der Differenz der Potentiale der benachbarten bipolaren Platten (siehe Figur 3).

$$V_a = V_a - V_b \qquad (2)$$

Hierbei werden die einzelnen Brennstoffzellen mit den griechischen Indices $\alpha$, $\beta$, ... und die bipolaren Platten mit den römischen Indices a, b, ... bezeichnet.

Das bipolare Plattenpotential gehorcht der 2-dimensionalen Poisson-Gleichung [2]:

$$\frac{\partial^2 V_\alpha}{\partial x^2} + \frac{\partial^2 V_\alpha}{\partial y^2} = \frac{j_a - j_b}{h_p \sigma_p} \qquad (3)$$

wobei $h_p$ und $\sigma_p$ für die Dicke und die elektrische Leitfähigkeit der bipolaren Platte steht. $j_a$ ist die in die bipolare Platte eintretende Stromdichte und $j_b$ die aus der bipolaren Platte austretende Stromdichte. Gleichung (3) stammt ursprünglich aus der 3-dimensionalen Laplace-Gleichung, in der die zweite Ableitung des Potentials entlang der z-Koordinate durch die Differenz der lokalen Stromdichten $j_a$ und $j_b$ ausgedrückt wird.

Die Randbedingungen für das bipolare Plattenpotential sind wie folgt:

$$\frac{\partial V_b}{\partial x}\bigg|_{x=0,L} = 0, \qquad \frac{\partial V_b}{\partial y}\bigg|_{y=0,L} = 0, \quad V_b(0,0) = 1 \qquad (4)$$

Die ersten beiden Bedingungen bedeuten, dass kein Strom senkrecht zu den Stirnseiten der Bipolarplatten auftritt. Die dritte Bedingung setzt einen willkürlichen Referenzpunkt für das bipolare Plattenpotential fest. Für die Stabilisierung der numerischen Berechnung sollte dieser Wert nicht gleich Null gesetzt werden.

Die gemittelte Hauptstromdichte $J$ in allen Brennstoffzellen eines Brennstoffzellenstapels ist identisch. Die lokale Stromstärke in einer Zelle gehorcht daher der Bedingung

$$J = \frac{1}{A} \int_A j_\alpha \, dA \qquad (5)$$

wobei A die aktive Fläche einer Zelle darstellt. Die Gleichungen (1) bis (4) beschreiben die Stromdichten in den Zellen und die bipolaren Plattenpotentiale vollständig. Weitere Details sind aus der Literatur [1] zu entnehmen.

Der zu ermittelnde stromlose Bereich wird über einen Bereich des Zellwiderstands in der Zelle Nr. 3* modelliert (siehe Figur 4), wobei der Verlauf des Zellwiderstandes durch die Form einer Gauss-Kurve beschrieben wird. Der Widerstand der Zelle Nr. 3* ergibt sich demnach aus

$$R_3 = R^0 + R_* \exp\left(\frac{-(x - x_s)^2 \; -(y - y_s)^2}{s^2}\right) \qquad (6)$$

wobei $R^0$ den Zellwiderstand für eine ungestörte Zelle darstellt, der für alle Zellen identisch ist. $x_s$ und $y_s$ sind die Koordinaten des stromlosen Bereichs und s ist der charakteristische Radius des stromlosen Bereichs. Der Widerstand der Zelle Nr. 3* ($R3$) ist in Figur 4 dargestellt.

Für die im Rahmen der Erfindung durchgeführten Berechnungen wurden als Parameter die folgenden Werte eingesetzt:

| | | |
|---|---|---|
| Dicke der bipolaren Platte | $h_p$ (cm) | 0,1 |
| Leitfähigkeit der bipolaren Platte | $\sigma_p$ ($\Omega^{-1}$ cm$^{-1}$) | 200 |
| Kantenlänge der quadratischen bipolaren Platte | L (cm) | 2 |
| Widerstand einer ungestörten Zelle | $R^0$ ($\Omega$ cm$^2$) | 1 |
| Spitzenwiderstand des stromlosen Bereichs | $R^*$ ($\Omega$ cm$^2$) | 12 |
| Zellspannung (open-circuit) | $V_{oc}$ (V) | 1,2 |

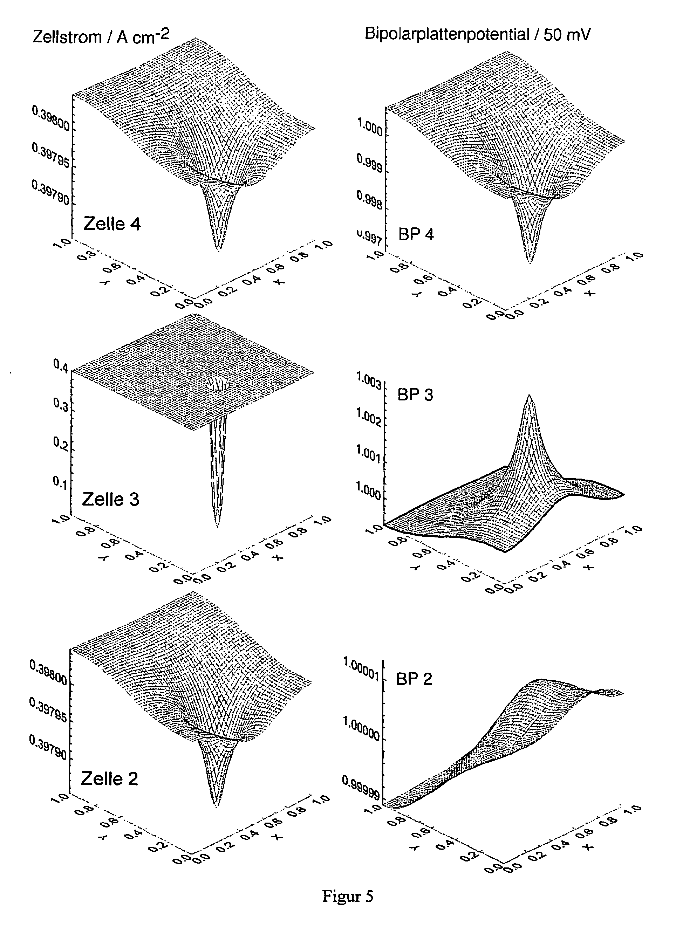

Die Figur 5 zeigt auf der linken Seite die senkrecht zur Zelle ermittelten Stromstärken der defekten Zelle Nr. 3*, sowie der zwei benachbarten Zellen Nr. 2 und Nr. 4. Der stromlose Bereich der Zelle Nr. 3* ist an dem schmalen Peak mit deutlich geringerer Stromstärke erkennbar. Auf der rechten Seite sind die entsprechenden Spannungen der bipolaren Platten 2, 3 und 4 dargestellt, wobei zu beachten ist, dass die Bipolarplatte 3 zwischen den Zellen 2 und 3* angeordnet ist. Zu beachten ist, dass in der Figur 5 und in allen weiteren Figuren die Entfernungen und Abstände nicht maßstabsgetreu eingezeichnet sind, sondern auf die Kantenlänge normiert sind, entsprechend der Formel:

$$x \rightarrow \frac{x}{L}, \qquad\qquad y \rightarrow \frac{y}{L}$$

wobei L die Kantenlänge der bipolaren Platte darstellt.

Wie man aus der Figur 5, linke Seite erkennen kann, erzeugt der kleine, konkrete stromlose Bereich der defekten Zelle Nr. 3* (scharfer Peak) entsprechende ähnliche "Abbilder dieses Bereiches" in den benachbarten Zellen. Dieser Effekt wird auch als Spiegelung bezeichnet und wurde ebenfalls schon in [1] erörtert. Bedeutsam ist, dass die Störungen der lokalen Stromstärken in den Abbildungen mit zunehmendem Abstand von der Zelle 3* erheblich geringer ausfallen, erkennbar an den geringeren Peakhöhen. Ferner nimmt der charakteristische Radius des stromlosen Bereichs in den Abbildungen (Peakbasis) deutlich zu im Vergleich zur Peakbasis des stromlosen Bereichs der Zelle Nr. 3*. Mit zunehmendem Abstand von der defekten Zelle werden die Effekte der Abbildungen somit zunehmend schwächer.

Die Störungen in der Stromstärke der defekten Zelle 3* bewirken eine Störung in den bipolaren Plattenpotentialen der bipolaren Platten 3 und 4, die benachbart zur Zelle Nr. 3* angeordnet sind (siehe Figur 5, rechte Seite). Die Variation des bipolaren Plattenpotentials bewirkt einen Strom in der Ebene der bipolaren Platten. Auf Grund des stromlosen Bereichs der Zelle 3* ist die aus dieser defekten Zelle in die benachbarten bipolaren Platten eintretende Stromdichte sehr inhomogen. Der Strom innerhalb der Ebene der bipolaren Platten führt nun dazu, dass der Strom, der aus den bipolaren Platten über die Oberfläche in die sich anschließenden Zellen 2 und 4 austritt, demgegenüber sehr viel homogener ist. Auf diese Weise funktionieren die bipolaren Platten wie "Strom-Gleichmacher", die den Effekt der Störung der Zellsströme jeweils ausgleichen, wobei die Intensität der Störung (Peakhöhe) abgeschwächt, dafür aber die lokale Ausdehnung der Störung (Peakbasis) vergrößert wird. Auch dieser Effekt ist in [1] schon näherer erläutert.

Bei dem in [1] vorgestellten Modell wurde jedoch ein relativ kleiner $R°$-Wert von 0,05 $\Omega$ cm$^2$ eingesetzt, der

regelmäßig ein Anzeichen für eine gut konzipierte und gut befeuchtete Wasserstoffbrennstoffzelle darstellt, die sich im Bereich der ohmschen Last der Polarisationskurve befindet. In einem solchen Fall fällt die charakteristische Breite der Störung der bipolaren Plattenspannung in der defekten Zelle regelmäßig klein aus, die Spannung selbst nimmt in Richtung der bipolaren Plattenkanten hin rasch ab und ist an den Kanten in der Regel gleich Null (siehe Figur 4 in [1]).

Es wurde nun gefunden, dass der in [1] verwendete $R^0$-Wert für den ungestörten Zellwiderstand jedoch nicht für alle Brennstoffzellen charakteristisch ist. Daher wurde ein 20 mal größerer $R^0$ in den hier vorgestellten Berechnungen verwendet.

Ein so hoher $R^0$-Wert ist insbesondere typisch für Direkt-Methanol-Brennstoffzellen (DMFC), für Hochtemperatur-Brennstoffzellen (SOFC) und für nahe am Grenzstrom betriebene Polymer-Elektrolyt-Brennstoffzellen (PEFC). Bei einem so großen $R^0$-Wert fällt aber die Störung der Spannung an den Kanten der Bipolarplatten regelmäßig deutlich größer aus, wie aus der Figur 5, bipolare Platte der Zelle Nr. 3* erkennbar ist. Es wurde daher vermutet, dass sich die Breite der Störung der Spannung in den Bipolarplatten, die an die defekte Zelle Nr. 3* grenzen, proportional zur Wurzel des ungestörten Zellwiderstands $R^0$ verhält $(\sqrt{R^0}\,)$.

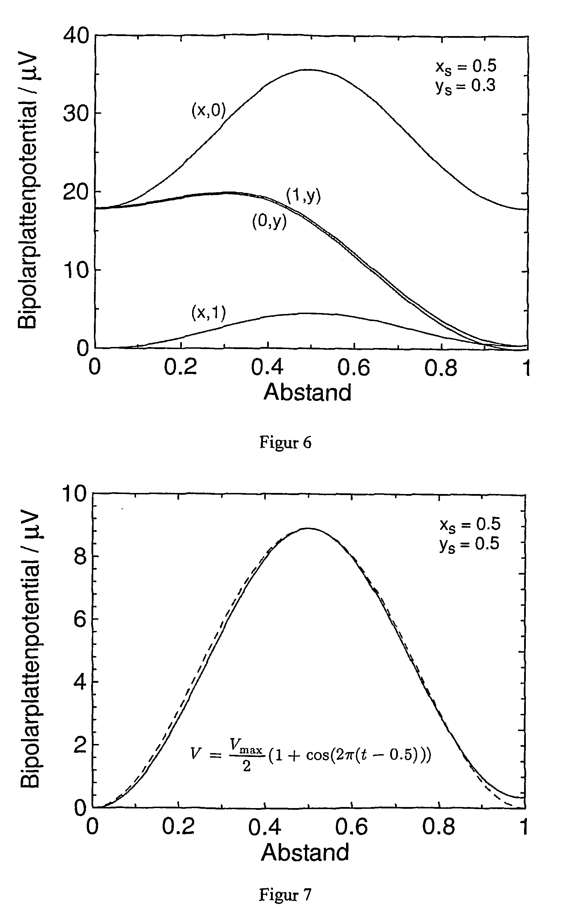

Betrachtet man die Form des Verlaufs des Potentials entlang der Kanten der Bipolarplatte 3, so weist dieser in der Regel einen charakteristischen Verlauf mit einem Peak auf. Die Positionen der Peakmaxima der Kurven jeweils entlang der Kanten der Bipolarplatten weisen dabei auf die Position des stromlosen Bereiches hin. Die Figur 6 zeigt die übereinander gelegten Spannungskurven für die Bipolarplatte 3 entlang der vier Kanten der Bipolarplatte, die durch die Begriffe (x, 0), (x, 1), (0, y) und (1, y) gekennzeichnet sind. Die Position der Peaks in den Spannungskurven korreliert dabei gut mit der Position des Zentrums des stromlosen Bereiches bei (0.5, 0.3). Das legt die Vermutung nahe, dass mit der Messung des Potentials entlang der Kanten der Bipolarplatten einerseits die Anwesenheit eines Defektes in Form eines stromlosen Bereiches detektiert werden kann, und andererseits auch der Ort dieses Defekts lokalisiert werden kann. Die Spannungskurven entlang der Kanten von der Bipolarplatten 3 und 4 verlaufen nahezu antisymmetrisch, was nur für den Fall zutrifft, dass die Bipolarplatten 3 und 4 direkt benachbart zu der defekten Zelle angeordnet sind. Dies ist nochmals ein Hinweis darauf, wo sich der defekte, stromlose Bereich befindet.

Zur überprüfung der Erfindung wurden mehrere Berechnungen durchgeführt, bei denen die Position des Zentrums des stromlosen Bereichs innerhalb der Zelle 3* variiert wurde.

Für den Sonderfall, dass sich das Zentrum des stromlosen Bereichs exakt in der Mitte der Zelle 3 befindet, zeigen die Spannungskurven entlang der vier Kanten identische Verläufe. Der Verlauf kann dann sehr gut durch eine Kosinus-Funktion beschrieben werden, wie in Figur 7 dargestellt.

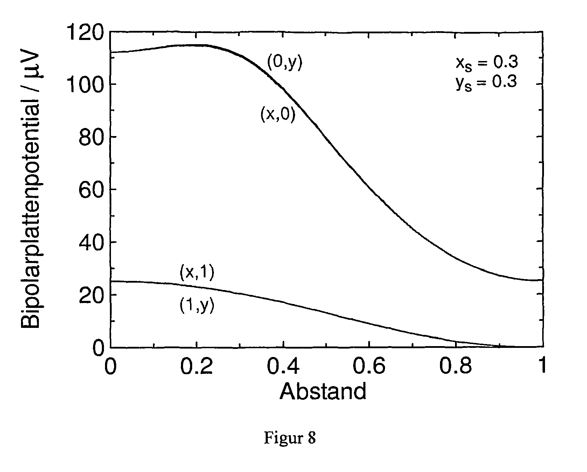

Wird das Zentrum des stromlosen Bereichs auf die Koordinaten (0.3, 0.3) gelegt, so ergeben die Spannungskurven entlang der Kanten (0, y) und (x, 0) bei 0,2 ein Maximum (siehe Figur 8). Daraus lässt sich dann direkt das Zentrum des stromlosen Bereiches bei (0.2, 0.2) ablesen.

Diese Ergebnisse vermitteln den Eindruck, dass die Position der Spitzen der Spannungskurven entlang der Zellkanten mit den Koordinaten des Zentrums des stromlosen Bereichs korreliert, sofern das Zentrum nicht sehr nah an der Zellkante liegt. Wenn der stromlose Bereich weit von der Kante der Bipolarplatte entfernt liegt, wirkt sich die Kante kaum auf die Potentialverteilung aus, und die Spannungskurve an der Kante folgt der Kurve des stromlosen Bereichs. Sofern aber der stromlose Bereich nah an der Kante der Bipolarplatte liegt, wird das Potential entlang der Kante stark durch die Ladungen beeinflusst, die durch die Abbildungen entlang der Kanten induziert werden. Diese Ladungen stellen sicher, dass kein Strom senkrecht zu den Stirnseiten der Bipolarplatten fließt. Sofern der stromlose Bereich nah an der Kante der Bipolarplatte liegt, verursachen diese Ladungen eine deutliche Störung des Bipolarplattenpotentials.

Vergleiche mit hier erzielten Bipolarplattenpotentialen verglichen mit denen aus [1] zeigen derzeit, dass sich die charakteristische Breite der Spannungsstörungen proportional zu $\sqrt{R^0}$ ergibt.

Noch nicht geklärt ist derzeit die Frage, in wieweit zwei oder mehrere stromlose Bereiche innerhalb einer Zelle in die vorgenannten Überlegungen einbezogen werden können. Die hier vorgestellten Störungen des Potentials der Bipolarplatten liegen in der Größenordnung von einigen μV bis 10 mV und können mit einem herkömmlichen Detektor ermittelt werden, zum Beispiel durch ein Digital Microvoltmeter DMV-001. In Figur 8 sind beispielsweise Spannungen bis 120 μV aufgetragen. Ob die Störungen in den Potentialen der Bipolarplatten ermittelt werden können, hängt einerseits von dem Material der Bipolarplatte ab, andererseits aber auch von der Sensibilität des Detektors.

Während eine Bipolarplatte aus Graphit eine geringe elektrische Leitfähigkeit aufweist und damit bei einer Störung einen relativ großen Effekt bewirken würde, würde bei einer gleichdicken Bipolarplatte aus Stahl der Effekt für die gleiche Störung ca. 100-mal geringer ausfallen.

Das Verfahren ist umso effektiver und sensibler, je geringer die elektrische Leitfähigkeit des Bipolarplattenmaterials ist. Das Verfahren ist zudem umso effektiver, je genauer und empfindlicher das Mittel zur Detektion der Spannungen entlang der Kanten der Bipolarplatte ist, da dann auch noch kleinste Störungen im Potential erkannt werden können.

In der Anmeldung zitierte Literatur:

[1] A. A. Kulikovsky, Mirroring of current-free spots in a fuel cell stack, J. Electrochem. Soc., 154:B817-B822, 2007.
[2] A. A. Kulikovsky, Voltage lass in bipolar plates in a fuel cell stack, J. Power Sources, 160:431-435; 2006.
[3] A. A. Kulikovsky, Electrostatic broadening of current-free spots in a fuel cell stack: The mechanism of stack aging?, Electrochem. Comm., 8:1225-1228, 2006.
[4] P. C. GHOSH P et al.: "In situ approach for current distribution measurement in fuel cells", JOURNAL OF POWER SOURCES, ELSEVIER SA, CH, Bd. 154, Nr. 1, 9. März 2006 (2006-03-09), Seiten 184-191.

**Patentansprüche**

1. Verfahren zur Erkennung und Lokalisation eines stromlosen Bereichs innerhalb einer Brennstoffzelle in einem Brennstoffzellenstapel, wobei dieser Brennstoffzellenstapel wenigstens zwei Brennstoffzellen sowie wenigstens eine zwischen den Brennstoffzellen angeordnete Bipolarplatte umfasst,
**dadurch gekennzeichnet,**
**dass** die Änderung der Spannung entlang der einzelnen äußeren Kanten der Bipolarplatte detektiert wird, wobei bei den jeweiligen Spannungskurven wenigstens ein Peakmaximum ermittelt wird und wobei aus der Lage der Peakmaxima der entsprechenden Spannungskurven die Koordinaten des Zentrums des stromlosen Bereiches ermittelt werden.

2. Verfahren nach Anspruch 1, bei dem die Änderung der Spannung entlang aller vier äußerer Kanten der Bipolarplatte detektiert wird.

3. Verfahren nach einem der Ansprüche 1 bis 2, bei dem die Änderung der Spannung entlang der äußeren Kanten aller Bipolarplatten des Stapels detektiert wird.

4. Verfahren nach einem der Ansprüche 1-3, bei dem ein Direkt-Methanol-Brennstoffzellenstapel, ein mit Wasserstoff betriebener Brennstoffzellenstapel oder ein Hochtemperatur-Brennstoffzellenstapel-eingesetzt wird.

**Claims**

1. Method for recognising and locating an area without current in a fuel cell within a fuel cell stack, in which this fuel cell stack comprises at least two fuel cells as well as at least one bipolar plate arranged between the fuel cells,
**characterised in that**
the change of voltage is detected along the individual external edges of the bipolar plate, in which at least one maximum peak is established in the relevant voltage curves and in which the coordinates of the centre of the area without current may be established fi-om the position of the maximum peaks.

2. Method according to claim 1, in which the change of voltage is detected along all four external edges of the bipolar plate.

3. Method according to one of claims 1 to 2, in which the change of voltage is detected along all four external edges of all the bipolar plates of the stack.

4. Method according to one of claims 1 - 3, in which a direct methanol fuel cell stack, a fuel cell stack operated by hydrogen or a high temperature fuel cell stack is used.

**Revendications**

1. Procédé de détection et de localisation d'une zone sans courant à l'intérieur d'une pile à combustible dans un empilement de piles à combustible, cet empilement de piles à combustible comportant au moins deux piles à combustible ainsi qu'au moins une plaque bipolaire disposée entre les piles à combustible,

**caractérisé en ce que** la variation de la tension est détectée le long des différents bords externes de la plaque bipolaire, au moins un maximum de pic étant déterminé sur les courbes de tension respectives et les coordonnées du centre de la zone sans courant étant déterminées à partir de la position du maximum de pic des courbes de tension respectives.

2. Procédé selon la revendication 1, dans le cadre duquel la variation de la tension est détectée le long des quatre bords externes de la plaque bipolaire.

3. Procédé selon l'une quelconque des revendications 1 à 2, dans le cadre duquel la variation de la tension est détectée le long des bords externes de toutes les plaques bipolaires de l'empilement.

4. Procédé selon l'une quelconque des revendications 1 à 3, dans le cadre duquel on met en oeuvre un empilement de piles à combustible à méthanol direct, un empilement de piles à combustible fonctionnant à l'hydrogène ou un empilement de piles à combustible haute température.

Figur 1

Figur 2

Figur 3

Figur 4

Zellstrom / A cm$^{-2}$

Bipolarplattenpotential / 50 mV

Figur 5

10

Figur 6

$$V = \frac{V_{max}}{2}(1 + \cos(2\pi(t - 0.5)))$$

Figur 7

Figur 8

## IN DER BESCHREIBUNG AUFGEFÜHRTE DOKUMENTE

**In der Beschreibung aufgeführte Nicht-Patentliteratur**

- **A. A. KULIKOVSKY.** Mirroring of current-free spots in a fuel cell stack. *J. Electrochem. Soc.,* 2007, vol. 154, B817-B822
- **A. A. KULIKOVSKY.** Voltage lass in bipolar plates in a fuel cell stack. *J. Power Sources,* 2006, vol. 160, 431-435

- **A. A. KULIKOVSKY.** Electrostatic broadening of current-free spots in a fuel cell stack: The mechanism of stack aging?. *Electrochem. Comm.,* 2006, vol. 8, 1225-1228
- In situ approach for current distribution measurement in fuel cells. **P. C. GHOSH P et al.** JOURNAL OF POWER SOURCES. ELSEVIER SA, 09. Marz 2006, vol. 154, 184-191